Europäisches Patentamt

European Patent Office

Office européen des brevets

(11) Veröffentlichungsnummer: **0 286 067 B1**

(12) **EUROPÄISCHE PATENTSCHRIFT**

(45) Veröffentlichungstag der Patentschrift: **01.07.92**

(51) Int. Cl.⁵: **A61C 19/04**

(21) Anmeldenummer: **88105475.3**

(22) Anmeldetag: **06.04.88**

(54) **Messtaster zur Erfassung der Taschentiefe von Zahnhalteapparaten (Parodontien).**

(30) Priorität: **09.04.87 DE 3712054**

(43) Veröffentlichungstag der Anmeldung:
**12.10.88 Patentblatt 88/41**

(45) Bekanntmachung des Hinweises auf die
Patenterteilung:
**01.07.92 Patentblatt 92/27**

(84) Benannte Vertragsstaaten:
**AT BE CH DE ES FR GB GR IT LI LU NL SE**

(56) Entgegenhaltungen:
**EP-A- 0 061 218**
**EP-A- 0 119 813**
**EP-A- 0 194 083**
**WO-A-86/05382**
**DE-U- 1 707 936**

(73) Patentinhaber: **Fuierer, Dieter, Dr.**
**Happinger Strasse 74**
**W-8200 Rosenheim(DE)**

(72) Erfinder: **Fuierer, Dieter, Dr.**
**Happinger Strasse 74**
**W-8200 Rosenheim(DE)**

(74) Vertreter: **Tiedtke, Harro, Dipl.-Ing. et al**
**Patentanwaltsbüro Tiedtke-Bühling-Kinne-**
**Grupe-Pellmann-Grams-Struif Bavariaring 4**
**Postfach 20 24 03**
**W-8000 München 2(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Beschreibung

Die Erfindung bezieht sich auf eine Meßeinrichtung zur Erfassung der Tiefe einer Zahnfleischtasche mit einem Taststift, der bis zum Grund der Zahnfleischtasche einführbar ist, mit einem relativ zum Taststift bewegbaren Tastelement, und mit einer Auswerteinrichtung.

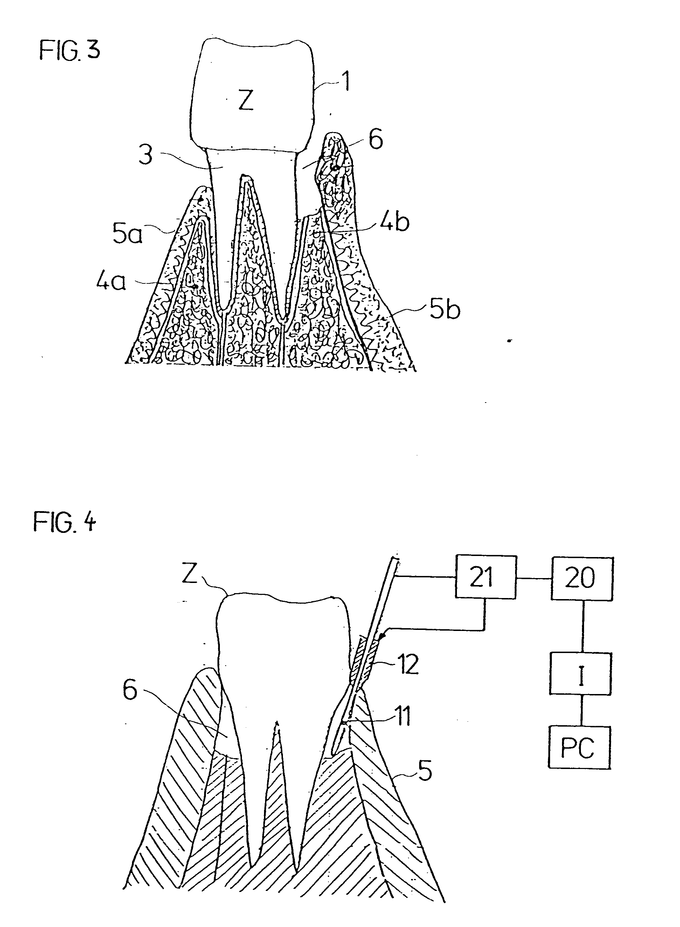

Aus der DE-GM 17 07 936 ist eine Meßeinrichtung mit einem Meßtaster zur Messung der Tiefe von Zahnfleischtaschen bekannt, die ein Maß für das jeweilige Stadium einer Parodontitis (Zahnfleischentzündung) ist. Gemäß Fig. 3 ist ein durch Parodontitis geschädigtes Parodontium eines Zahnes Z mit seiner Wurzel 3 im Kieferknochen 4 verankert, wobei das Zahnfleisch 5 normalerweise ungefähr bis zum Zahnhals reicht, bei dem die Wurzel 3 in die Zahnkrone 1 übergeht. In der rechten Hälfte der Figur ist schematisch eine für Parodontitis typische, aus entzündetem Zahnfleisch 5b und geschädigtem Kieferknochen 4b gebildete Zahnfleisch- und Knochentasche 6 dargestellt, die die bei gesunden Zähnen übliche Tiefe von 1 bis 2 mm weit übersteigt. In der linken Hälfte der Figur ist eine andere Art der Schädigung der Parodontien gezeigt, bei aufgrund von Rezession des Zahnfleisches 5a und des Kieferknochens 4a zwischen der Zahnkrone und dem oberen Rand des Zahnfleisches ein Teil der Zahnwurzel freiliegt.

Bisher übliche Zahnfleischtaschen-Meßtaster bestehen aus einem an einem Handgriff befestigten und geeignet abgewinkelten Taststift, der eine Vielzahl von Meß-Markierungen aufweist und zur Erfassung der Tiefe der Zahnfleischtasche bis zum Grund in diese eingeführt wird. Der Zahnarzt muß dann anhand der jeweils noch sichtbaren Markierung die Taschentiefe ablesen. Beim Meßtaster gemäß dem DE-GM 17 07 936 ist an der Meß-Skala ein zusätzliches bewegbares Tastelement vorhanden, das das Ablesen der Taschentiefe erleichtern soll. Das Tastelement ist allerdings mittels einer Blattfeder vorgespannt, so daß es deutlichen Widerstand bei einer Verschiebung zeigt. Die daher bei einer Einführung des Meßtasters in die Zahnfleischtaste auftretenden Reibungskräfte erschweren allerdings ein feinfühliges Einbringen des Meßtasters bis zum Taschengrund und begründen für den Patienten ein unangenehmes Druckgefühl am oberen Zahnfleischrand.

Zur genauen Beurteilung des Krankheitsbilds der Zahnfleischtasche jedes einzelnen Zahnes wird die Taschentiefe üblicherweise an vier diametral gegenüberliegenden Stellen bestimmt, wobei die gewonnenen Werte in ein entsprechendes Formblatt eingetragen werden. Es liegt auf der Hand, daß diese Prozedur entweder sehr zeitraubend ist, da der Zahnarzt nach jedem der bis zu 4 × 32 = 128 Meßvorgänge den Meßtaster beiseite legen und den Meßwert in das Formblatt eintragen muß, oder aber eine Hilfsperson benötigt, die die vom Zahnarzt erfaßten und genannten Meßwerte in das Formblatt einträgt.

In der EP-A-0 194 083 ist eine Sonde beschrieben, bei der ein Meßkopf mittels Druckluft in einem Zylinder bis auf den Boden einer Zahnfleischtasche gebracht wird. Die Messung der Taschentiefe erfolgt relativ zu einer Führung über ein Ausgangssignal eines piezoelektrischen Wandlers bzw. eines linearen Differenzwandlers. Der ausgefahrene Meßkopf wird mittels einer Feder oder durch Unterdruck in dem Zylinder zurückgezogen.

Eine Meßeinrichtung der eingangs genannten Art ist in der WO-A-86 05 382 gezeigt. Dort wird ein gegenüber einer Führung bewegliches Bündel optischer Fasern in ausgefahrenem Zustand in eine Zahnfleischtasche eingeführt. Eine Vorspannung des Bündels wird zum einen mittels einer Feder und zum anderen mittels einer Spule erzeugt. Dabei wird die Spule über Zuleitungen und einen Schalttransistor intermittierend mit Spannung versorgt, wobei die Schaltfrequenz des Transistors durch die Induktivität der Spule bestimmt wird. Diese ist auch ein Maß für die Auslenkung des Spulenkernes aus der Spule und somit ein Maß für die Auslenkung des Bündels gegenüber der Führung.

Eine Messung der Tiefe von Zahnfleischtaschen erfolgt dann, wenn das Bündel in die Zahnfleischtasche eingeführt ist und die Führung auf den Rand des Zahnfleisches aufsetzt. Zum Erhalt geeigneter Meßwerte ist man somit gezwungen, zunächst die Sonde in die Zahnfleischtasche einzuführen und dann zur Meßwertaufnahme die Führung mit einer gewissen Krafteinwirkung auf den Zahnfleischrand aufzusetzen. Da der Zahnfleischrand nicht unbedingt gerade verläuft und zudem bereits unterschiedlich stark geschädigt sein kann, ist der Erhalt genauer und vergleichbarer Meßwerte schwierig.

Der Erfindung liegt daher die Aufgabe zugrunde, eine Meßeinrichtung gemäß dem Oberbegriff des Patentanspruchs 1 derart weiterzubilden, daß die Tiefe einer Zahnfleischtasche auf einfache Weise genau ermittelbar ist.

Diese Aufgabe wird erfindungsgemäß dadurch gelöst, daß mittels des Tastelementes entlang des Taststiftes ein Lichtstrahl schwenkbar ist, und daß mit der Auswerteinrichtung die Tiefe der Zahnfleischtasche aus der Lage des auf den Rand der Zahnfleischtasche gerichteten Lichtstrahles gegenüber der Lage des auf das untere Ende des Taststiftes gerichteten Lichtstrahles bestimmbar ist.

Vorteilhafte Weiterbildungen sind Gegenstand der Unteransprüche.

Die erfindungsgemäße Meßeinrichtung, bei der die Höhenlage des Lichtstrahls eingestellt wird, zeichnet sich durch folgende Vorteile aus:

a) Es tritt keine Krafteinwirkung auf den oberen Rand des Zahnfleisches auf.

b) Bei nicht gerade verlaufendem Zahnfleischrand kann der Zahnarzt denjenigen Meßpunkt wählen, der ihm am geeignetsten erscheint.

c) Wie bereits eingangs erläutert, kann die Zahnwurzel auch durch eine Rezession des Knochens und des Zahnfleisches gemäß der Darstellung in der linken Hälfte von Fig. 3 teilweise freiligen. Mit Hilfe des Lichtstrahls ist es dem Zahnarzt nun möglich, auch die Höhe dieses freiliegenden Bereichs zu erfassen und geeignet auszuwerten.

Die Erfindung wird nachstehend anhand von Ausführungsbeispielen unter Bezugnahme auf die Zeichnung näher beschrieben. Es zeigen:

Fig. 1 ein Ausführungsbeispiel der Meßeinrichtung,

Fig. 2 eine mögliche Ausführungsform der verschwenkbaren Projektionsoptik der Meßeinrichtung gemäß Fig. 1,

Fig. 3 schematisch eine Schnittdarstellung eines durch Rezession bzw. durch Parodontitis geschädigten Zahnhalteapparats und des dazugehörigen Zahnes und

Fig. 4 einen in eine Zahnfleischtasche eingeführten Meßtaster, dessen Auswerteelektronik in Funktionsblöcken gezeigt ist.

Zunächst wird anhand von Fig.4 das Funktionsprinzip und der prinzipielle Aufbau einer herkömmlichen Meßeinrichtung bzw. eines Meßtasters näher erläutert. Gemäß Fig.4 weist ein durch Parodontitis geschädigtes Zahnbett eines Zahnes Z eine umlaufende Zahnfleischtasche 6 auf, in die der Zahnarzt den Taststift 1 des Meßtasters bis zum Grund der Zahnfleischtasche, den der obere geschädigte Rand des Alveolarknochens 4 bildet, eingeführt hat. Da das untere Ende eines Tastkörpers 12, das sich vor dem Einführen des Taststiftes 11 auf der gleichen Höhe wie dessen unteres Ende befunden hat, während des Einführens des Taststiftes 11 auf dem oberen Rand des Zahnfleisches 5 aufsitzt, sind die unteren Enden von Taststift und Tastkörper bei Grundberührung des Taststiftes 11 schließlich eine der Tiefe der Zahnfleischtasche entsprechende Strecke voneinander entfernt.

Diese Strecke wird mittels eines Meßwertgebers 21 erfaßt und von einer Auswerteeinrichtung, insbesondere einer Auswerteelektronik 20, die vorzugsweise in dem Handgriff des Meßtasters eingebaut ist, in ein zur ermittelten Taschentiefe proportionales Ausgangssignal umgesetzt. Das Ausgangssignal der Auswerteelektronik 20 wird über ein möglichst dünnes Kabel oder drahtlos mittels eines Infrarotsenders einer Daten-Schnittstelle (Interface) I zugeführt, die es zunächst in Digitaldaten umsetzt und anschließend entsprechend der Sendenorm des verwendeten Schnittstellentyps einem angeschlossenen Rechner PC, der beispielsweise ein herkömmlicher Personalcomputer sein kann, zuführt. Der Rechner PC speichert die Daten und wertet sie nach Abschluß einer Meßreihe entsprechend einem vorgegebenen Programm aus, das so ausgelegt ist, daß für jeden Patienten die vollständige Meßreihe in Übereinstimmung mit einem von den Krankenkassen geforderten Formblatt ausgedruckt wird. Der Zahnarzt wird hierdurch von langwieriger und lästiger Schreibarbeit befreit.

Um dem Rechner PC jeweils mitzuteilen, wann ein gültiger Meßwert vorliegt, kann an dem Handgriff eine Übernahmetaste vorgesehen werden, die der Zahnarzt im geeigneten Moment betätigt, worauf die Daten-Schnittstelle I dem Rechner PC einen neuen Meßwert sendet. Zur Vereinfachung der Bedienung ist es aber auch möglich, den Meßvorgang so zu gestalten, daß die Daten-Schnittstelle I dem Rechner PC in regelmäßigen, kurzen Abständen Meßdaten zusendet, wobei der Rechner aus dem jeweiligen Maximalwert dieser Daten erkennen kann, daß eine Grundberührung des Taststiftes 11 und damit der gewünschte bzw. zu speichernde Meßwert vorliegt. Da bei diesem Verfahren jedoch jedes, d.h. auch ein probeweises Einführen des Taststiftes von dem Rechner registriert wird, sollte in diesem Fall an dem Handgriff des Meßtasters eine Löschtaste vorgesehen werden, die im Bedarfsfall betätigt wird und bewirkt, daß die Daten-Schnittstelle I dem Rechner PC einen Löschbefehl übermittelt.

Anstelle der Verwendung einer Daten-Schnittstelle I und eines Rechners PC ist es auch möglich, die Meßwerte in einer im Handgriff des Meßtasters vorgesehenen Speichereinrichtung zu speichern, so daß ein Kabel oder ein Infrarotsender entbehrlich sind. Bei einer solchen Ausgestaltung kann entweder eine Anzeigevorrichtung vorgesehen werden, mit der die gespeicherten Meßwerte bei Bedarf abgerufen und in das Formblatt eingetragen werden können, oder der Meßtaster oder die Speichereinrichtung wird zur Datenübertragung an die Schnittstelle I angeschlossen.

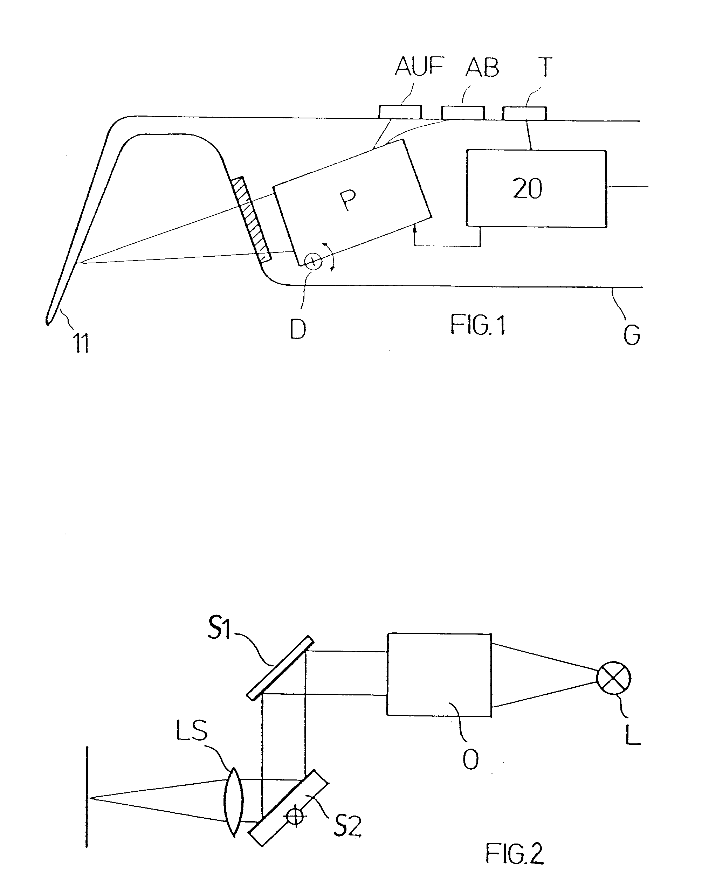

Nun wird unter Bezugnahme auf die Fig. 1 und 2 ein Ausführungsbeispiel der Meßeinrichtung näher erläutert.

Bei diesem Ausführungsbeispiel wird als Tastelement ein Lichtgenerator, insbesondere eine Projektionsoptik P verwendet, die im Handgriff G der Meßeinrichtung an der dem Taststift 11 zugewandten Frontseite des Handgriffs eingebaut ist und einen Lichtstrahl erzeugt, der auf Höhe bzw. in der Ebene des Taststiftes 11 fokussiert ist. Die Projektionsoptik P ist um einen Drehpunkt D in der Weise drehbar gelagert, daß bei ihrer Drehung der Lichtstrahl entlang des Taststiftes 11 auf- und abschwenkbar ist. Der Lichtstrahl ist dabei entweder direkt auf den Taststift 11 gerichtet oder liegt in seiner unmittelbaren Nähe, so daß der Auftreffpunkt des Lichtstrahls parallel zum Taststift 11 wandert. Die Intensität des Lichtstrahls und seine Farbe sind so gewählt, daß der Auftreffpunkt des Lichtstrahls deutlich erkennbar ist.

Die Drehung der Projektionsoptik P wird entweder manuell oder mittels eines nicht gezeigten Elektromotors durchgeführt, der über ein aus zwei Tasten ("AUF" und "AB") bestehendes Bedienelement an der Aussenseite des Handgriffs G in beiden Richtungen ansteuerbar ist, so daß sich der Lichtstrahl bei Betätigung der entsprechenden Taste nach oben oder unten bewegt. Der tiefstmögliche Auftreffpunkt des Lichtstrahls, der manuell oder über die Taste "AB" einstellbar ist, fällt mit dem unteren Ende des Taststiftes 11 zusammen und entspricht dem Meßwert 0 mm. Der oberste, manuell oder mit der Taste "AUF" einstellbare Auftreffpunkt ist auf einen sinnvollen Wert von beispielsweise 20 bis 25 mm begrenzt und stellt den maximalen Meßwert dar.

Eine Auswerteinrichtung bzw. eine Auswerteelektronik 20 erfaßt den jeweiligen Meßwert mittels eines bekannten Drehwinkelgebers und erzeugt ein Ausgangssignal, das der diesem Winkel entsprechenden Strecke entspricht. Als Drehwinkelgeber können inkrementale (Sektor-) Drehgeber mit Referenzimpuls und (ggf.) Vorwärts/Rückwärts-Erkennung, codierte (Sektor-) Drehgeber oder auch analoge Sektor-Drehwinkelgeber, die z.B. einen Graukeil oder ein Raster mit veränderlicher Dichte aufweisen, verwendet werden. Wenn der Zahnarzt eine an dem Handgriff G vorgesehene Übernahmetaste T betätigt, wird das jeweilige Ausgangssignal als gültiger Meßwert übernommen und der Daten-Schnittstelle I zugeführt oder in einer Speichereinrichtung gespeichert.

Fig.2 zeigt eine mögliche Ausführungsform der Projektionsoptik P, die aus einem Objektiv O besteht, an dessen Eintrittsseite eine Lichtquelle L vorgesehen ist. Das aus dem Objektive O austretende Licht wird über zwei Spiegel S1 und S2 umgelenkt und tritt über eine Scharfstellungslinse LS aus dem Handgriff G aus. Die Verschwenkung des Spiegels kann bei dieser Anordnung sehr einfach dadurch erreicht werden, daß die Achse des Spiegels S2 drehbar gelagert wird, wobei der Spiegel S2 entsprechend dem gewünschten Winkel gedreht wird.

Der Meßvorgang wird bei dieser Meßeinrichtung wie folgt durchgeführt: Der Zahnarzt führt den Taststift 11 in die Zahnfleischtasche bis zu deren Grund ein, wobei sich der Lichtstrahl in seiner untersten Position befindet. Anschließend betätigt der Zahnarzt die Taste "AUF" solange, bis der Auftreffpunkt des Lichtstrahls den Zahnfleischrand erfaßt. Damit ist die Tiefe der Zahnfleischtasche ermittelt und der Zahnarzt betätigt die Übernahmetaste T, worauf der Meßwert übertragen oder gespeichert wird. In vorteilhafter Weise wird der Lichtstrahl nach Betätigung der Übernahmetaste T von der Auswerteelektronik 20 durch entsprechende Ansteuerung des Elektromotors automatisch in seine untere Ausgangsposition gebracht, so daß der Meßtaster sogleich für den nächsten Meßvorgang vorbereitet ist. Die Taste "AB" dient in diesem Fall nur zu Korrekturzwecken.

Mit diesem Ausführungsbeispiel der Meßeinrichtung kann darüber hinaus auch die Höhe des freiliegenden Bereichs der Zahnwurzel erfaßt werden; diese durch Rezession von Zahnfleisch und Aveolarknochen auftretende Art der Schädigung des Zahnhalteapparates ist in der linken Hälfte der Fig.3 dargestellt. Zur Bestimmung der Höhe des freiliegenden Wurzelbereichs weist die Meßeinrichtung eine (nicht gezeigte) Taste "W" auf, wobei der Meßvorgang in diesem Fall wie folgt abläuft: Der Zahnarzt steckt den Taststift 11 in die Zahnfleischtasche und betätigt die Taste "AUF" solange, bis der Lichtstrahl die Oberkante des Zahnfleisches und damit den unteren Rand des freiliegenden Wurzelbereichs erfaßt. Daraufhin betätigt er die Taste "W", wodurch der Auswerteelektronik 20 oder dem angeschlossenen Rechner PC mitgeteilt wird, daß nun der freiliegende Wurzelbereich zu messen ist. Anschließend wird wiederum die Taste "AUF" solange betätigt, bis der Lichtstrahl die Grenze zur Zahnkrone erreicht, bei der die Zahnwurzel in die Zahnkrone übergeht. Durch Betätigung der Übernahmetaste wird der Meßwert schließlich gespeichert und steht für eine Auswertung zur Verfügung.

Es ist natürlich auch möglich, die bekannte mit der erfindungsgemäßen Meßeinrichtung zu kombinieren und beide Systeme zusammen in eine Meßeinrichtung einzubauen. In diesem Fall wird die Taschentiefe vorzugsweise mit dem Tastkörper bestimmt, da dieses Verfahren von dem Zahnarzt weniger Aufmerksamkeit erfordert. Die Höhe des freiliegenden Wurzelbereichs wird auf vorstehend beschriebene Weise mit dem Lichtstrahl ermittelt, wobei keine Taste "W" erforderlich ist, da der Startpunkt für diese Messung aus dem Meßwert des Tastkörpers bekannt ist, so daß der Zahnarzt lediglich den Zahnhals anvisieren und den entsprechenden Meßwert mit der Übernahmetaste speichern muß. Die Auswerteelektronik 20 oder der Rechner PC können dann die tatsächliche Höhe des freiliegenden Wurzelbereichs durch Subtraktion von der mittels des Tastkörpers 20 ermittelten Tiefe der Zahnfleischtasche bestimmten.

**Patentansprüche**

1. Meßeinrichtung zur Erfassung der Tiefe einer Zahnfleischtasche
mit einem Taststift (**11**), der bis zum Grund der Zahnfleischtasche einführbar ist,
mit einem relativ zum Taststift (**11**) bewegbaren Tastelement (**P**), und
mit einer Auswerteinrichtung (**20**),
**dadurch gekennzeichnet,**
daß mittels des Tastelementes (**P**) entlang des Taststiftes (**11**) ein Lichtstrahl schwenkbar ist, und
daß mit der Auswerteinrichtung (**20**) die Tiefe der Zahnfleischtasche aus der Lage des auf den Rand der Zahnfleischtasche gerichteten Lichtstrahles gegenüber der Lage des auf das untere Ende des Taststiftes (**11**) gerichteten Lichtstrahles bestimmbar ist.

2. Meßeinrichtung nach Anspruch 1,
**dadurch gekennzeichnet,**
daß das Tastelement durch einen in einem Handgriff (**G**) der Meßeinrichtung an der dem Taststift (**11**) zugewandten Frontseite desselben angeordneter Lichtgenerator (**P**) gebildet ist, der einen in der Ebene des Taststiftes (**11**) gebündelten Lichtstrahl erzeugt.

3. Meßeinrichtung nach Anspruch 1 oder 2,
**dadurch gekennzeichnet,**
daß der Lichtstrahl vom Benutzer mittels eines Bedienelementes entlang des Taststiftes auf- und abschwenkbar ist und daß eine Übernahmetaste (**T**) vorgesehen ist, bei deren Betätigung die Auswerteinrichtung (**20**) die Winkellage des Lichtstrahles auswertet.

4. Meßeinrichtung nach Anspruch 3,
**dadurch gekennzeichnet,**
daß die Auswerteinrichtung (**20**) die Winkellage des schwenkbaren Lichtgenerators (**P**) mittels eines Drehgebers erfaßt.

5. Meßeinrichtung nach einem der Ansprüche 3 oder 4,
**dadurch gekennzeichnet,**
daß eine Taste vorgesehen ist, bei deren Betätigung die Auswerteinrichtung (**20**) die Winkellage des Lichtstrahles derart auswertet, daß zusätzlich die Höhe des freiliegenden Wurzelbereiches erfaßbar ist.

6. Meßeinrichtung nach einem der vorangehenden Ansprüche,
**dadurch gekennzeichnet,**
daß eine Datenschnittstelle (**I**) vorgesehen ist, mittels der die in Digitaldaten umgesetzten Ausgangssignale der Auswerteinrichtung (**20**) lesbar und außerhalb der Meßeinrichtung auswertbar sind.

## Claims

1. Measurement device for determining the depth of a periodontal pocket, with a probe pin (11) which can be introduced as far as the bottom of the periodontal pocket, with a scanning element (P) which is movable relative to the probe pin (11), and with an evaluation device (20), characterised in that a light beam can be swivelled along the probe pin (11) by means of the scanning element (P), and in that, with the evaluation circuit (20), the depth of the periodontal pocket can be determined from the position of the light beam directed to the edge of the periodontal pocket compared to the position of the light beam directed to the lower end of the probe pin (11).

2. Measurement device according to Claim 1, characterised in that the scanning element is made up of a light generator (P) arranged in a handpiece (G) of the measurement device, at the front end thereof facing towards the probe pin (11), which light generator (P) generates a light beam focused in the plane of the probe pin (11).

3. Measurement device according to Claim 1 or 2, characterised in that the user can swivel the light beam up and down along the probe pin by means of an operating element, and in that a transfer button (T) is provided, upon whose activation the evaluation device (20) evaluates the angular position of the light beam.

4. Measurement device according to Claim 3, characterised in that the evaluation device (20) determines the angular position of the swivellable light generator (P) by means of a rotary position sensor.

5. Measurement device according to one of Claims 3 or 4, characterised in that a button is provided, upon whose activation the evaluation device (20) evaluates the angular position of the light beam in such a way that in addition the height of the exposed root area can be determined.

6. Measurement device according to one of the preceding claims, characterised in that a data interface (I) is provided, by means of which the output signals from the evaluation device (20), which have been converted into digital data, can be read off and can be evaluated outside the measurement device.

## Revendications

1. Dispositif de mesure, pour mesurer 1a profondeur d'une alvéole dentaire,
   comportant une tige de palpage (11), pouvant être introduite jusqu'au fond de l'alvéole dentaire,
   avec un élément de palpage (P) déplaçable par rapport à la tige de palpage (11), et
   avec un dispositif d'exploitation (20),
   caractérisé en ce que
   au moyen de l'élément de palpage (P), un rayon lumineux pour pivoter le long de la tige de palpage (11), et
   en ce que la profondeur de l'alvéole dentaire peut être déterminée à l'aide du dispositif d'exploitation (20), à partir de la position du rayon lumineux orienté sur le bord de l'alvéole dentaire, par rapport à la position du rayon lumineux orienté sur l'extrémité inférieure de la tige de palpage (11).

2. Dispositif de mesure selon la revendication 1, caractérisé en ce que l'élément de palpage est formé par un générateur lumineux (P), disposé dans une poignée (G) du dispositif de mesure, sur la face avant de celui-ci qui est tournée vers la tige de palpage (11), le générateur lumineux (P) produisant un rayon lumineux focalisé dans le plan de la tige de palpage (11).

3. Dispositif de mesure selon la revendication 1 ou 2, caractérisé en ce que le rayon lumineux peut pivoter pour se lever et s'abaisser le long de la tige de palpage, du fait de l'utilisateur, au moyen d'un élément de manoeuvre, et en ce qu'une touche de transfert (T) est prévue, lors de l'actionnement de laquelle le dispositif d'exploitation (20) détermine la position angulaire du rayon lumineux.

4. Dispositif de mesure selon la revendication 3, caractérisé en ce que le dispositif d'exploitation (20) mesure la position angulaire du générateur lumineux pivotant (P), au moyen d'un capteur de rotation.

5. Dispositif de mesure selon l'une des revendications 3 ou 4, caractérisé en ce qu'est prévue une touche lors de l'actionnement de laquelle le dispositif d'exploitation (20) détermine la position angulaire du rayon lumineux, de telle façon qu'on peut en plus mesurer la hauteur de la zone de racine libre.

6. Dispositif de mesure selon l'une des revendications précédentes, caractérisé en ce qu'est prévu un interface de données (I), au moyen duquel les signaux de sortie, convertis en données numériques, du dispositif d'exploitation (20) sont lisibles et exploitables à l'extérieur du dispositif de mesure.

FIG.1

FIG.2

FIG. 3

FIG. 4